# EUROPÄISCHE PATENTSCHRIFT

(11) **EP 2 594 117 B1**
(45) Veröffentlichungstag und Bekanntmachung des Hinweises auf die Patenterteilung: **29.06.2016**
(21) Anmeldenummer: 11741419.3
(22) Anmeldetag: 13.07.2011
(51) Int. Cl.: H05B 41/288

(54) **ZÜNDSCHALTUNG FÜR EINE HOCHDRUCK-GASENTLADUNGSLAMPE**
STARTING CIRCUIT FOR A HIGH-PRESSURE GAS DISCHARGE LAMP
CIRCUIT D'ALLUMAGE POUR UNE LAMPE À DÉCHARGE DE GAZ À HAUTE PRESSION

(30) Priorität: 15.07.2010 DE 102010031373
(43) Veröffentlichungstag der Anmeldung: 22.05.2013
(73) Patentinhaber: Tridonic AG, 8755 Ennenda (CH)
(72) Erfinder: HUBER, Martin, CH-8854 Siebnen (CH); BRAUN, Markus, CH-8633 Wolfhausen (CH); KÜNG, Thomas, CH-8772 Nidfurn (CH)
(74) Vertreter: Rupp, Christian
(86) Internationale Anmeldenummer: PCT/EP2011/061943
(87) Internationale Veröffentlichungsnummer: WO 2012/007498

(56) Entgegenhaltungen:
- WO-A1-03/077615
- WO-A1-2010/023464
- WO-A2-2007/138553

## Beschreibung

Die vorliegende Erfindung bezieht sich auf eine Zündschaltung für eine Hochdruck-Gasentladungslampe
mit mindestens zwei in Serie geschalteten Schaltern die eine mit einer Gleichspannungsquelle (UG) verbindbare Halbbrücke bilden,
mit einem aus einer Resonanzkapazität und einer Resonanzinduktivität bestehenden Serienresonanzkreis, der zu dem einen Schalter parallel geschaltet ist,
mit Steuerungsmitteln zum wechselweisen und gegensinnigen Öffnen und Schließen der Schalter, und
mit einer Transformationsinduktivität, die mit der Resonanzinduktivität magnetisch gekoppelt ist,
wobei die Lampe so mit den vorgenannten Bauelementen verschaltet ist, dass ihr eine durch Resonanzüberhöhung an der Resonanzinduktivität erzeugte und durch die magnetische Kopplung der beiden Induktivitäten hochtransformierte Wechselspannung zugeführt wird, wenn die Schaltfrequenz für die Schalter gleich oder annähernd gleich der Resonanzfrequenz des Serienresonanzkreises ist.

Hochdruck-Gasentladungslampen unterscheiden sich von Niederdruck-Gasentladungslampen insbesondere dadurch, dass sie hohe Zündspannungen benötigen, die im Bereich von 3 bis 5 kV liegen. Bei Anwendung der Schaltungsanordnung für Heiss-Wiederzündung können sogar Zündspannungen (Spannungsdifferenz zwischen den Elektroden der Hochdruck-Gasentladungslampe) in der Größenordung von 10 kV auftreten.

Bisher bekannte Schaltungsanordnungen zum Zünden von Hochdruck-Gasentladungslampen sind asymmetrisch wirksam, d.h. das durch Spannungsüberhöhung an einem Serienresonanzkreis erzeugte Hochspannungspotential wird der einen ("heißen") Elektrode der Hochdruck-Gasentladungslampe zugeführt, während die andere ("kalte") Elektrode auf einem niedrigeren Bezugspotential liegt.

Repräsentativ für diesen Stand der Technik ist die WO 03/077615. Die in Figur 1 dieser Druckschrift gezeigte Zündschaltung ist in etwas modifizierter Form zur Erläuterung des Standes der Technik in die vorliegende Anmeldung übernommen worden und in Figur 1 dargestellt. Weiterer Stand der Technik kann der Druckschrift WO 2007/138553 A2 entnommen werden, die ein Lampenbetriebsgerät und ein entsprechendes Verfahren zum Betreiben einer Hochdruck-Entladungslampe (HID-Lampe) offenbart, bei dem eine gelöschte Hockdruck-Entladungslampe leicht (wieder) gezündet werden kann.

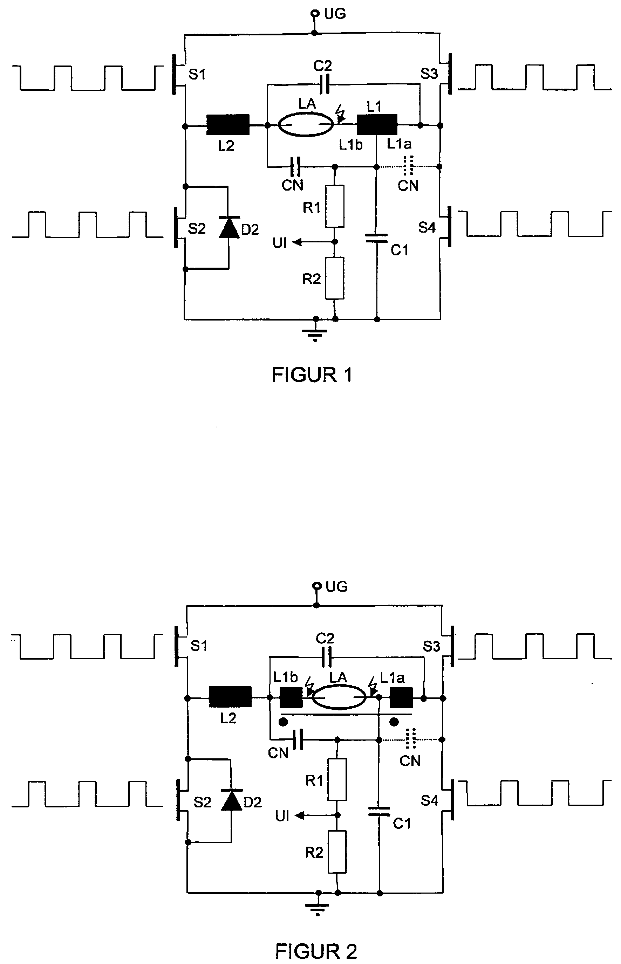

Die in Figur 1 gezeigte bekannte Schaltung dient nicht nur zum Zünden einer Hochdruck-Gasentladungslampe (nachfolgend nur noch "Lampe" genannt), sondern dient gleichzeitig zum Betreiben derselben nach der Zündung, was im Folgenden "Normalbetrieb" genannt werden wird. Im vorliegenden Fall interessiert jedoch im Wesentlichen nur das Zündverhalten.

Figur 1 zeigt eine aus vier Schaltern S1 bis S4 bestehende Vollbrücke, die mit dem oberen Anschluss an einem Gleichspannungspotential UG und mit ihrem unteren Anschluss an Masse liegt. Die Schalter S1 bis S4 können von nicht dargestellten Steuerungsmitteln ein- und ausgeschaltet werden. Zur Realisierung der Schalter werden beispielsweise Leistungs-FETs eingesetzt. Die Taktung der Schalter kann bspw. durch eine integrierte Steuerschaltung, wie einen ASIC oder einen Mikrokontroller erfolgen.

Normalerweise wird im Normalbetrieb (also nicht im Zündbetrieb, sondern im folgenden Brennbetrieb) ein Schalter einer Diagonale hochfrequent betrieben und der andere Schalter derselben Diagonale dauerhaft geschlossen ist. Die jeweils andere Diagonale an Schaltern ist dabei
geöffnet. Nachfolgend erfolgt eine im Vergleich zur Schaltertaktung niederfrequente Kommutierung der Schalterdiagonalen, d.h. der Schalter der anderen Diagonale wird nunmehr hochfrequent getaktet.

In einer ersten Phase der Kommutierung wird also der Schalter S2 hochfrequent getaktet, während S3 dauerhaft eingeschaltet ist. In der anderen Phase der Kommutierung wird dann der Schalter S1 hochfrequent getaktet, während S4 dauerhaft eingeschaltet ist.

Anzumerken ist, dass die beiden niederfrequent getakteten Schalter (einer Halbbrücke) mit Kondensatoren ausgeführt werden können, so dass nur zwei Transistoren notwendig sind. Die niederfrequente Taktung bezieht sich dabei auf die oben erläuterte Kommutierung der Diagonalen. Die Erfindung betrifft also auch "Vollbrücken", bei denen 2 Kondensatoren und 2 aktiv getaktete Schalter vorliegen, wobei die aktiv getakteten Schalter vorzugsweise als eine Halbbrücke verschaltet sind.

Für die Zündphase werden die Schalter S3 und S4 wechselweise und gegensinnig mit einer bestimmten Frequenz geöffnet und geschlossen werden, während die Schalter S1 und S2 geöffnet oder gegensinnig getaktet, vorzugsweise in der Diagonale der Schalter S3 und S4, werden.

Die in Figur 1 dargestellte Schaltung enthält einen Serienresonanzkreis, der von einer Resonanzinduktivität L1a und einer Resonanzkapazität C1 gebildet ist. Der Serienresonanzkreis ist parallel zu dem Schalter S4 geschaltet. Dabei ist die Resonanzinduktivität L1a mit dem Verbindungspunkt der beiden Schalter S3 und S4 verbunden, während die Resonanzkapazität C1 mit Masse verbunden ist. Die Resonanzinduktivität L1a bildet mit einer Transformationsinduktivität L1b eine Gesamtinduktivität L1, die als Spartransformator geschaltet ist. Das bedeutet, dass zwischen L1a und L1b eine Anzapfung vorgesehen ist, mit der die Resonanzkapazität C1 verbunden ist. L1a und L1b sind also durch eine gemeinsame Wicklung realisiert und magnetisch miteinander gekoppelt. Wenn das Windungsverhältnis von L1a und L1b 1:1 ist, so ergibt sich von L1a zu L1 ein Transformationsverhältnis von 1:2.

Die Gesamtinduktivität L1, die Lampe LA und eine Entstördrossel L2 bilden als Serienschaltung die horizontale Brückendiagonale der Vollbrücke. Der Verbindungspunkt zwischen der Entstördrossel L2 und der Lampe LA ist mit dem einen Anschluss eines Kopplungskondensators C2 verbunden, dessen anderer Anschluss an dem Verbindungspunkt der beiden Schalter S3 und S4 liegt.

Ferner verbindet eine Zusatzkapazität CN den Verbindungspunkt der Entstördrossel L2 und der Lampe LA mit dem Verbindungspunkt der Resonanzkapazität C1 und Anzapfung der Gesamtinduktivität L1. Alternativ dazu kann die ZusatzKapazität CN auch die Anzapfung der Gesamtinduktivität L1 und dem Verbindungspunkt der beiden Schalter S3 und S4 verbinden (gestrichelt dargestellt). Der Zweck der Zusatzkapazität CN ist in der WO 03/077615 erläutert und im Zusammenhang mit der hier interessierenden Zündfunktion von untergeordneter Bedeutung.

Parallel zu der Resonanzkapazität C1 liegt ein aus zwei Widerständen R1 und R2 gebildeter Spannungsteiler, von dessen Teilungspunkt ein die Resonanzspannung repräsentierendes Istwertsignal UI abgenommen werden kann.

Um die Lampe in Figur 1 zu zünden, werden die Schalter S1 und S2 - wie oben bereits erwähnt - dauerhaft geöffnet. Die Schalter S3 und S4 werden dagegen mit einer oberhalb der Resonanzfrequenz des Serienresonanzkreises L1a/C1 liegenden Frequenz wechselweise und gegensinnig geöffnet und geschlossen. Dadurch erzeugt die aus den beiden Schaltern S3 und S4 bestehende Halbbrücke eine Wechselspannung entsprechender Frequenz, die an dem Serienresonanzkreis L1a/C1 anliegt. Durch Absenken der Schaltfrequenz in Richtung der Resonanzfrequenz entsteht an der Resonanzinduktivität L1a infolge der Resonanzüberhöhung eine zunehmend höher werden Wechselspannung, die durch die Spartransformator-Funktion der Gesamtinduktivität L1 noch höher transformiert wird. Die über der Gesamtinduktivität L1 liegende hohe Wechselspannung wird durch die direkte Verbindung der Transformationsinduktivität L1b mit der einen Elektrode der Lampe LA einerseits und durch die Verbindung der Resonanzkapazität L1a mit der anderen Elektrode der Lampe LA über den Kopplungskondensator C2 andererseits an der Lampe LA als Zündspannung wirksam.

Wie oben bereits ausgeführt wurde, erfolgt die Zuführung der Zündspannung zu der Lampe LA hier in asymmetrischer Weise. Da bei ist die heiße Elektrode im vorliegenden Fall diejenige die direkt mit der Gesamtinduktivität L1 bzw. deren Transformationsinduktivität L1b verbunden ist (rechte Elektrode), während die kalte Elektrode diejenige ist, die über den Kopplungskondensator mit dem Verbindungspunkt der beiden Schalter S3 und S4 verbunden ist (linke Elektrode). Dieser Verbindungspunkt liegt wechselweise auf Masse oder Gleichspannungs-Hochpotential.

Es bedarf für den Fachmann keiner weiteren Erläuterungen, dass die zu der heißen Elektrode führenden Zuleitungen sowie die mit der heißen Elektrode in Verbindung stehenden Bauelemente strengen Isolationsanforderungen genügen müssen. Andernfalls treten unerwünschte Kriechströme auf. Das gilt insbesondere dann, wenn die Zündfrequenz - wie meistens - im Bereich von 30 kHz oder höher liegt. Aus Sicherheitsgründen sind die entsprechenden Normen in jüngster Zeit zusätzlich verschärft worden.

Der Erfindung liegt die Aufgabe zugrunde, eine Zündschaltung für eine Hochdruck-Gasentladungslampe zu schaffen, die es erlaubt, den Isolationsaufwand zu senken.

Die Aufgabe ist erfindungsgemäß dadurch gelöst,
dass die Resonanzinduktivität und die Transformationsinduktivität mit jeweils einem Anschluss an dem Verbindungspunkt der beiden Schalter zusammengeführt sind,
dass die beiden Induktivitäten mit ihrem anderen Anschluss mit der Lampe verbunden sind und diese somit in Form einer Serienschaltung zwischen sich einschließen,
und dass der Wicklungssinn der beiden Induktivitäten so gewählt ist, dass sich die in den beiden Induktivitäten erzeugten Spannungen über der Elektrodenstrecke der Lampe addieren und somit symmetrisch an den Elektroden wirksam sind.

Die erfindungsgemäße Lösung hat neben der möglichen Reduzierung des Isolationsaufwandes noch den Vorteil, dass mit der Schaltung eine Heiss-Wiederzündung möglich ist, bei der bekanntlich zwischen den Elektroden eine Spannungsdifferenz bis zu 10 kV auftreten kann.

Außerdem zeigt die Schaltung im Normalbetrieb ein verbessertes EMV-Verhalten, was offensichtlich auf die symmetrische Spannungszuführung zu den Elektroden bzw. die symmetrische Ausgestaltung der Resonanzinduktivität einerseits und der Transformationsinduktivität andererseits zurückzuführen ist.

Der eine Anschluss der Transformationsinduktivität kann über einen Kopplungskondensator mit dem Verbindungspunkt der beiden Schalter verbunden sein.

Das Windungsverhältnis bzw. Induktivitätsverhältnis der Resonanzinduktivität L1a und der Transformationsinduktivität L1b kann 1:1 sein.

Zwei weitere in Serie geschaltete Schalter können vorgesehen sein, die eine weitere Halbbrücke bilden, welche mit der erstgenannten Halbbrücke parallel geschaltet ist, so dass die beiden Halbbrücken eine Vollbrücke bilden,
wobei auch die beiden weiteren Schalter von den Steuerungsmitteln gesteuert sind.

Weitere Vorteile, Merkmale und Eigenschaften der Erfindung sollen nunmehr anhand eines Ausführungsbeispiels und bezugnehmend auf die Figuren der begleitenden Zeichnungen erläutert werden.
Figur 1 zeigt dabei eine aus der WO 03/077615 bekannte Schaltung, und
Figur 2 zeigt eine Schaltung gemäss einem Ausführungsbeispiel der Erfindung.

Ein Ausführungsbeispiel der Erfindung wird nachfolgend anhand Figur 2 beschrieben.

In der die Erfindung repräsentierenden Figur 2 sind für Bauelemente mit gleichen Funktionen die gleichen Bezugszeichen verwendet worden, wie in Figur 1.

Neu an der Schaltung in Figur 2 ist gegenüber der in Figur 1, dass die Resonanzinduktivität L1a und die Transformationsinduktivität L1b zwar noch magnetisch gekoppelt, aber getrennt und nicht mehr als Spartransformator geschaltet sind. Sie wirken wie ein normaler Transformator mit Primär- und Sekundärwicklung, und ihre Endanschlüsse sind separat zugänglich.

Die Lampe LA bildet mit der Resonanzinduktivität L1a und der Transformationsinduktivität L1b eine Serienschaltung, wobei die rechte Elektrode mit der Resonanzinduktivität L1a verbunden ist und die linke Elektrode mit der Transformationsinduktivität L1b. Der Kopplungskondensator C2 verbindet nunmehr den nicht mit der Lampe LA verbundenen Anschluss der Transformationsinduktivität L1b mit dem Verbindungspunkt der beiden Schalter S3 und S4.

Die Zusatzkapazität CN liegt zwischen dem nicht mit der Lampe LA verbundenen Anschluss der Transformationsinduktivität L1b und dem Verbindungspunkt des Resonanzkondensators C1 und der Resonanzinduktivität Lla.

Die Zusatzkapazität CN bildet mit der Resonanzinduktivität L1a einen Parallel-Resonanzkreis.

Der Kondensator C1 des Serienschwingkreises kann anstatt wie dargestellt mit dem Masse-Potential auch mit dem Potential UG, d.h. mit einem vorhandenen fixen Potential, verbunden sein.

Durch die Anordnung der Zusatzkapazität CN wird einerseits ein zusätzlicher Zündkondensator eingefügt (womit sich die Belastungen aufteilen) und somit ein Parallel-Resonanzkreis für die Zündung gebildet, außerdem wird auch das EMV-Verhalten (elektromagnetische Verträglichkeit) der Schaltung verbessert, da die Zusatzkapazität CN im Betrieb eine Filterwirkung übernimmt.

Die Zusatzkapazität CN hat im Übrigen nicht nur die Aufgabe des Schutzes vor einem kapazitiven Betrieb, sondern sie bestimmt auch die Resonanzfrequenz mit, wobei der Kondensator C1 im Betrieb durch Anordnen der Zusatzkapazität CN (nach dem Zünden) durch einen geringeren Strom IC belastet wird. Die Zusatzkapazität CN trägt auch einen Teil des im Zündkreis fließenden Stromes. Da ein Serien-Parallelresonanzkreis durch die Bauteile L1, C1, CN gebildet wird, ist es nur erforderlich, dass CN ungefähr eine mindestens gleich große Kapazität wie C1 hat, um wirksam zu werden. Die Zusatzkapazität CN soll nach Möglichkeit nicht deutlich geringer als die Kapazität von C1 sein, da sonst der Einfluß der CN bei der Zündung auch zu vernachlässigen und somit unwirksam wird.

Bevorzugt ist also CN/C1 grösser oder gleich 0,7, mehr bevorzugt grösser oder gleich 1, noch mehr bevorzugt grösser oder gleich 2.

Die über der Resonanzinduktivität L1a durch Resonanzüberhöhung entstehende Wechselspannung wird nunmehr auf die Transformationsinduktivität L1b übertragen, wobei der Wicklungssinn - wie durch die dicken Punkte an den Beiden Induktivitäten angedeutet ist - so gewählt ist, dass über der Lampe eine Summenspannung entsteht, die doppelt so hoch wie die Einzelspannungen ist. Dabei ist vorausgesetzt, dass die beiden Induktivitäten L1a und L1b gleich sind bzw. dass deren Windungsverhältnis 1:1 ist. Das bedeutet, dass die Elektroden symmetrisch mit je der Hälfte der Zündspannung (bezüglich Masse) beaufschlagt werden. Bei vorgegebener Zündspannung kann also der Isolationsaufwand für die Zuleitungen zu den Elektroden und für die Bauelemente verringert werden. Der Vorteil geht dabei über eine Halbierung des Aufwands hinaus, da bekanntlich der Isolationsaufwand nichtlinear mit ansteigender Potentialdifferenz ansteigt.

Beide Elektroden sind spannungsmässig nunmehr gleichwertig, d.h. es gibt keine heiße und kalte Elektrode mehr.

## Patentansprüche

1. Zündschaltung für eine Hochdruck-Gasentladungslampe (LA)
mit mindestens zwei in Serie geschalteten Schaltern (S3, S4), die eine mit einer Gleichspannungsquelle (UG) verbindbare Halbbrücke bilden,
mit einem aus einer Resonanzkapazität (C1) und einer Resonanzinduktivität (L1a) bestehenden Serienresonanzkreis, der zu dem einen Schalter (S4) parallel geschaltet ist,
mit Steuerungsmitteln zum wechselweisen und gegensinnigen Öffnen und Schließen der Schalter (S3, S4), und
mit einer Transformationsinduktivität (L1b), die mit der Resonanzinduktivität magnetisch gekoppelt ist,
wobei die Lampe (LA) so mit den vorgenannten Bauelementen verschaltet ist, dass ihr eine durch Resonanzüberhöhung an der Resonanzinduktivität (L1a) erzeugte und durch die magnetische Kopplung der beiden Induktivitäten (L1a, L1b) hochtransformierte Wechselspannung zugeführt wird, wenn die Schaltfrequenz für die Schalter (S3, S4) gleich oder annähernd gleich der Resonanzfrequenz des Serienresonanzkreises (L1a, C1) ist,
**dadurch gekennzeichnet,**
**dass** die beiden Induktivitäten (L1a, L1b) mit jeweils einem Anschluss an dem Verbindungspunkt der beiden Schalter (S3, S4) zusammengeführt sind,
**dass** die beiden Induktivitäten (L1a, L1b) mit ihrem anderen Anschluss mit der Lampe (LA) verbunden sind und diese somit in Form einer Serienschaltung zwischen sich einschließen, und dass der Wicklungssinn der beiden Induktivitäten (L1a, L1b) so gewählt ist, dass sich die in den beiden Induktivitäten (L1a, L1b) erzeugten Spannungen über der Elektrodenstrecke der Lampe (LA) addieren und somit symmetrische an den Elektroden wirksam sind.

2. Schaltungsanordnung nach Anspruch 1,
**dadurch gekennzeichnet,**
**dass** der eine Anschluss der Transformationsinduktivität (L1b) über einen Kopplungskondensator (C2) mit dem Verbindungspunkt der beiden Schalter (S3, S4) verbunden ist.

3. Schaltungsanordnung nach Anspruch 1 oder 2,
**dadurch gekennzeichnet,**
**dass** das Windungsverhältnis bzw. Induktivitätsverhältnis der Resonanzinduktivität L1a und der Transformationsinduktivität L1b 1:1 ist.

4. Schaltungsanordnung nach einem der vorherigen Ansprüche,
**gekennzeichnet durch**
zwei weitere in Serie geschaltete Schalter (S1, S2), die eine weitere Halbbrücke bilden, welche mit der erstgenannten Halbbrücke (S3, S4) parallel geschaltet ist, so dass die beiden Halbbrücken eine Vollbrücke bilden, wobei auch die beiden weiteren Schalter (S1, S2) von den Steuerungsmitteln gesteuert sind.

5. Schaltungsanordnung nach einem der vorherigen Ansprüche,
**gekennzeichnet durch**
eine Zusatzkapazität CN, die mit einer der beiden Induktivitäten (L1a) einen Parallelresonanzkreis bildet.

## Claims

1. Starting circuit for a high-pressure gas discharge lamp (LA)
with at least two switches connected in series (S3, S4) that form a half bridge connectable with a DC voltage source (UG),
with a series-resonant circuit, consisting of a resonance capacity (C1) and a resonance inductance (L1a), that is parallel connected to the one switch (S4), with control means for the alternating and opposite-direction opening and closing of the switches (S3, S4), and
with a transformation inductance (L1b) magnetically coupled to the resonance inductance,
wherein the lamp (LA) is interconnected with the abovementioned components in such a way that an AC voltage, generated by resonance amplification on the resonance inductance (L1a) and stepped-up by the magnetic coupling of the two inductances (L1a, L1b), is fed to the lamp, when the switching frequency for the switches (S3, S4) is equal or approximately equal to the resonance frequency of the series-resonant circuit (L1a, C1),
**characterized in that** the two inductances (L1a, L1b) are brought together with respectively one connector at the point of connection of the two switches (S3, S4), **in that** the two inductances (L1a, L1b) are connected to the lamp (LA) with their other connector, thus enclosing the lamp between them in the form of a connection in series, and **in that** the sense of winding of the two inductances (L1a, L1b) is selected in such a way that the voltages generated in the two inductances (L1a, L1b) add up via the electrode route of the lamp (LA), thus being symmetrically effective on the electrodes.

2. Circuit arrangement according to claim 1, **characterized in that** the one connector of the transformation inductance (Lib) is connected with the point of connection of the two switches (S3, S4) via a coupling capacitor (C2).

3. Circuit arrangement according to claim 1 or 2, **characterized in that** the turns ratio or inductance ratio of the resonance inductance L1a and the transformation inductance L1b is 1:1.

4. Circuit arrangement according to one of the preceding claims, **characterized in that** two further switches connected in series (S1, S2) that form a further half bridge, which is parallel connected to the first-mentioned half bridge (S3, S4), so that the two half bridges form a full bridge, wherein the two further switches (S1, S2) are also controlled by the control means.

5. Circuit arrangement according to one of the preceding claims, **characterized by** an additional capacitance CN that forms a parallel resonant circuit with one of the two inductances (L1a).

## Revendications

1. Circuit d'allumage pour une lampe à décharge de gaz à haute pression (LA) ayant au moins deux interrupteurs reliés en série (S3, S4) formant un demi-pont pouvant être relié à une source de tension en courant continu (UG),
ayant un circuit résonnant série, consistant en une capacité de résonance (C1) et une inductance à résonance (L1a), étant relié parallèlement au dit interrupteur (S4),
ayant des moyens de commande destinés à l'ouverture et la fermeture alternées et dans la direction opposée des interrupteurs (S3, S4), et
ayant une inductance de transformation (L1b) couplée de façon magnétique à l'inductance à résonance,
dans lequel la lampe (LA) est interconnectée aux susdits composants de sorte qu'une tension alternative, générée par l'amplification de la résonance sur l'inductance à résonance (L1a) et élevée par le couplage magnétique des deux inductances (L1a, L1b), est fournie à la lampe lorsque la fréquence de commutation des interrupteurs (S3, S4) est égale ou approximativement égale à la fréquence de résonance du circuit résonnant série (L1a, C1), **caractérisé en ce que** les deux inductances (L1a, L1b) sont réunies par respectivement un connecteur au point de connexion des deux interrupteurs (S3, S4), **en ce que** les deux inductances (L1a, L1b) sont reliées à la lampe (LA) par leur autre connecteur, renfermant ainsi la lampe entre eux sous la forme d'une connexion en série, et **en ce que** le sens d'enroulement des deux inductances (L1a, L1b) est sélectionné de manière à ce que les tensions générées dans les deux inductances (L1a, L1b) s'additionnent via le trajet de l'électrode de la lampe (LA), étant ainsi symétriquement efficace sur les électrodes.

2. Agencement de circuit selon la revendication 1, **caractérisé en ce que** ledit connecteur de l'inductance de transformation (L1b) est relié au point de connexion des deux interrupteurs (S3, S4) via un capaciteur de couplage (C2).

3. Agencement de circuit selon les revendications 1 ou 2, **caractérisé en ce que** le rapport d'enroulement ou le rapport de l'inductance de l'inductance à résonance L1a et de l'inductance de transformation L1b est de 1:1.

4. Agencement de circuit selon l'une quelconque des revendications précédentes, **caractérisé en ce que** deux interrupteurs supplémentaires reliés en série (S1, S2) forment un demi-pont supplémentaire étant relié parallèlement au susdit premier demi-pont (S3, S4), de sorte que les deux demi-ponts forme un pont complet, dans lequel les deux interrupteurs supplémentaires (S1, S2) sont aussi commandés par les moyens de commande.

5. Agencement de circuit selon l'une quelconque des revendications précédentes, **caractérisé par** une capacitance supplémentaire CN formant un circuit résonnant parallèle avec l'une des deux inductances (L1a).
